Europäisches Patentamt

European Patent Office

Office européen des brevets

(11) Publication number: **0 304 148**
**A2**

# EUROPEAN PATENT APPLICATION

(21) Application number: **88305686.3**

(22) Date of filing: **22.06.88**

(51) Int. Cl.⁴: **A23B 4/02**

(30) Priority: **22.06.87 US 64527**

(43) Date of publication of application:
**22.02.89 Bulletin 89/08**

(84) Designated Contracting States:
**DE ES FR GB IT NL SE**

(71) Applicant: **Lieberman, Leon D.**
**5269-3 New Castle Avenue**
**Encino California 91316(US)**

(72) Inventor: **Lieberman, Leon D.**
**5269-3 New Castle Avenue**
**Encino California 91316(US)**

(74) Representative: **Davies, Jonathan Mark et al**
**Reddie & Grose 16 Theobalds Road**
**London WC1X 8PL(GB)**

(54) **Method and apparatus for preparing a charged salt solution for treating meat.**

(57) Gravity flow salt charging and ionization apparatus using rack mounted components for fast and efficient salt charging and ionization of water for use in the treatment of meat. In one embodiment an open mixing bowl uses incoming water energy for agitating and swirling salt charge into water stream as it flows through the ionization tank. After ionization cycle, ionized salt solution is pumped directly to meat treatment station for use. In another embodiment, a concentrated brine solution is made periodically and stored in a storage tank from which a continuous supply of lower concentration treatment solution is made and charged on demand for delivery to meat treating stations.

EP 0 304 148 A2

## METHOD AND APPARATUS FOR PREPARING CHARGED SALT SOLUTION FOR TREATING MEAT

### Background of the Invention

This application relates to the pickling of meat.

As has long been the practice, various pickling solutions have been known for the curing and preservation of meats, and also for the purpose of imparting particularly improved flavors to meats. Many meats, and particular beef and pork, have been cured by bathing in aqueous salt solutions with or without dispersions of pickling agents, either by submerging the meat in the pickle or injecting the pickle through the meat. Pickle solutions are commonly formed from a water base into which sodium chloride (salt) and other additives are dissolved and flavorings are dispersed.

U.S. Patent 4,264,630 to Peter W. Rose entitled "Meat Curing Process Using An Anionic Charge Ion Emitter" (April 28, 1981), and the improvement patents to Peter W. Rose based thereon; namely U.S. Patent 4,264,631; 4,264,632; 4,276,313; 4,343,821; 4,419,205; and 4,343,822 an anionically charged salt solution in a variety of circumstances. It has been experienced, however, that the preparation of the salt solution for immediate use has not received adequate attention to facilitate its fresh preparation and use at the meat plant. The problems which must be solved to deploy a satisfactory system include a need to fully dissolve the salt a short time after it is added to the solution. Additionally, it is found that better and more uniform results are achieved by pretreating the available tap water, as will be described.

There is a need therefore, for providing an improved method and apparatus for the preparation of ionized salt solution for the treatment of meat.

In general, it is an object of the present invention to provide a complete treatment station which accepts typical tap water as an input, and rapidly and completely dissolves a measured quantity of salt therein, and prepares the same into an ionized solution ready for the addition of flavorants for the treatment of meat.

It is a further object of the invention to provide a method and apparatus of the above character which is set up on a batch cycle basis having a very low recycle time and in which the gravity flow of water into a mixing bowl churns and whirls incoming salt delivered to the bowl to rapidly dissolve the salt.

A further object of the invention is to provide a method and apparatus of the above character which is operated on a batch basis in quantities of about 20 gallons to provide an intermittent flow of ionized salt solution for use in a meat treating plant.

A further object of the invention is to provide a method and apparatus of the above character in which the ionization of the salt solution is carried out automatically in a charging tank controlled by timers and having charging power supplies.

It is a further general object of the present invention to provide an alternative method and apparatus for preparing an ionized salt solution for treating meat which provides a concentrated brine solution prepared in batch mode and temporarily held in a brine storage tank from which it is metered into a continuous water stream to form the desired concentration of salt solution, charged on demand, and then made available to meat processing stations on continuous or intermittent demand.

### Brief Description of the Drawings

Figure 1 is a schematic diagram illustrating the apparatus for pretreatment and formation of water into a charged salt solution for meat treatment in accordance with the first method of the present invention.

Figure 2 shows a meat treatment station adapted for use with the salt solution produced by the apparatus of Figure 1.

Figure 3 is a timing diagram indicating the circuit operating parameters for the apparatus of Figure 1.

Figure 4 is a schematic system diagram of apparatus for preparing a charged salt solution for meat treatment in accordance with an alternative method by which the solution can be delivered to a meat processing station continuously or intermittently.

Figure 5 is a diagrammatic view of the charging tank of Figure 4.

Figure 6 is an electrical wiring diagram for the apparatus by Figure 4.

Figure 7 is a flow diagram illustrating the operation of Figure 4.

### Description of the Preferred Embodiment

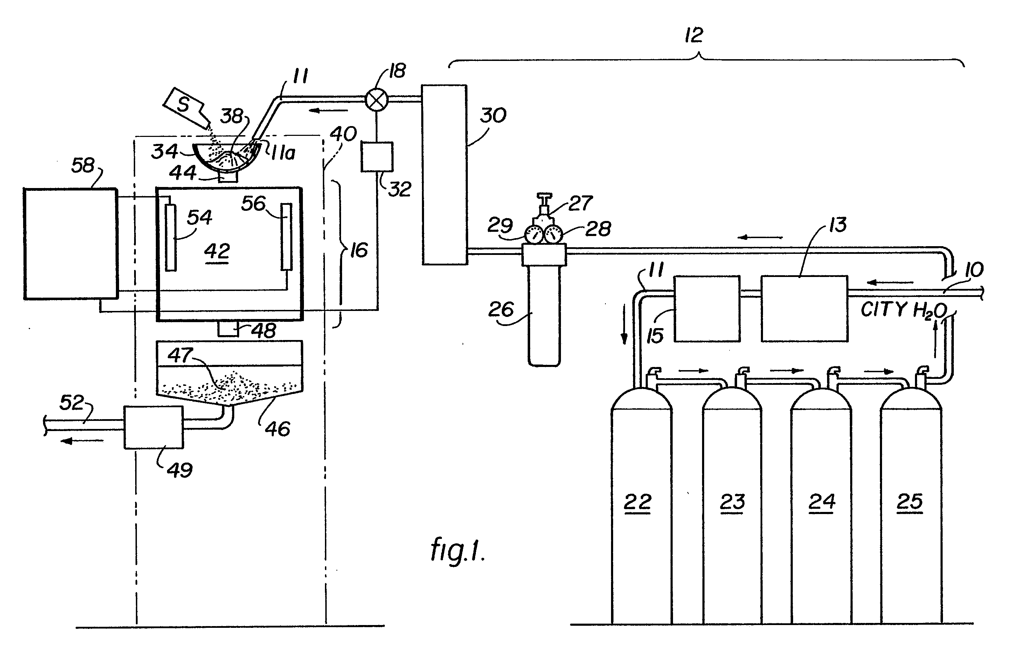

Referring now to Figure 1, the invention as shown is adapted for use in a 20 gallon batch ionization water supply treatment station for a meat processing plant.

The input water supply to the station may be taken untreated from well water or the city mains 10, and, if so, should be purified and filtered in the manner to be explained. The treatment station generally comprises a chiller 13, a booster pump 15, a water pretreatment (deionization and purification) section 12, a salt dissolve section 14, and an ionization section 16 through which incoming water flows in series through suitable piping 11, as controlled by valve 18 and a pressure controller 27, to be described.

The treatment section comprises both cation deionization tanks 22,23 and anionic deionization tanks 24,25. Water from the deionization tanks is preferably passed through a bacteriostat UV sterilization unit 30. Filter unit 26 is provide with a pressure regulator 27 together with incoming and outgoing pressure gauges 28,29 so that the pressure and flow delivered downstream to the mixing section 14 can be well regulated and the total flow of each batch be controlled by the combination of timer 32 and valve 18.

The mixing station comprises a mixing bowl 34 having an upwardly facing opening 36 into which water from the pretreatment section 12 is discharged at ambient pressure from an open orifice 11a directing the water stream downwardly and into the bowl in such a manner as to create a turbulent and agitating washing machine-like effect in the standing water 38 at the bottom of the bowl. The water pressure, the supply line pipe 11 gauge, and the flow regulating valve are designed into the bowl which keeps the bowl partially full, at 38, with standing·water during the fill cycle, with the force and orientation of the stream causing considerable swirling and agitation derived solely from the energy of the stream at discharge. Thus, the energy of the stream is harnessed to create a maximum movement and mixing of the water with incoming salt.

The bowl receives salt from a measured salt supply as by gradually metering salt into the bowl from a timed automatic dispenser or from a measuring cup 39 as may be poured in by hand, as shown. For a 20 gallon batch operation an exemplar salt quantity is about three pounds which may be delivered from a premeasured source. For different size batches of solution, the amount of salt added is proportionately increased or decreased. The salt mixing section 14 is mounted for support at the top of a standard support rack 40. A charging tank 42 of the ionization section 16 is mounted in the rack just below the outlet from the mixing bowl 34 from which water flows outwardly out and down by gravity through the bottom spigot 44 of the mixing bowl. It should be mentioned that the spigot size is adjusted in connection with the fill rate of water coming from the supply to the mixing bowl so that the mixing bowl is maintained at about one-third to one-half full during the water and salt mixing portion of the cycle.

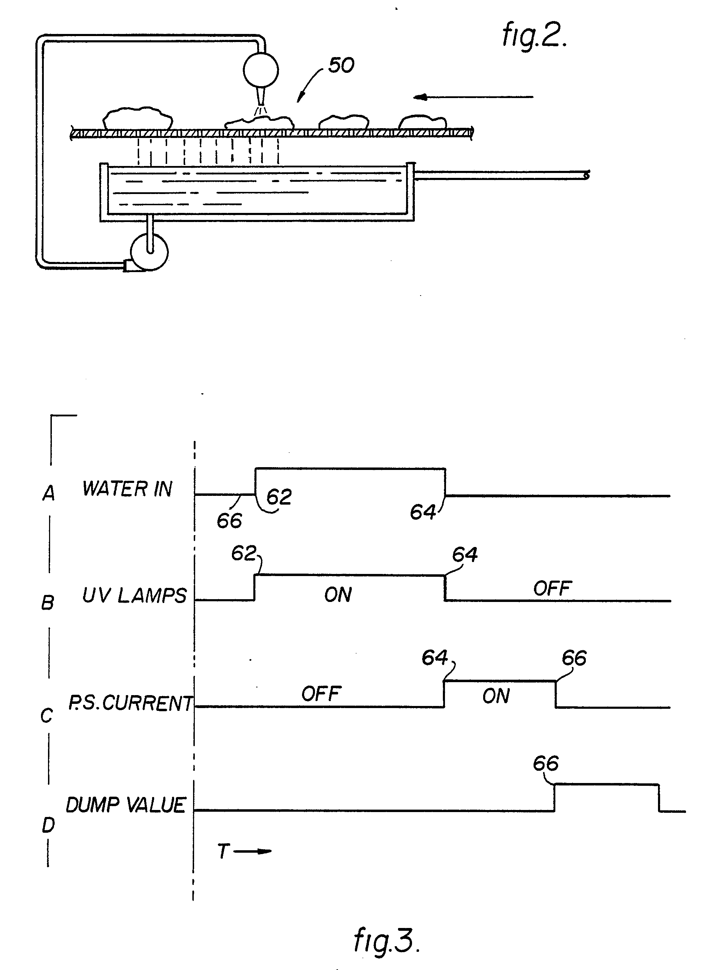

A final filter 46 employing a charcoal bed 47 is supported on the rack 40 immediately below tank 42 from which it receives ionized water by gravity discharge through spigot 48. The output of the charcoal filter 46 is treated water and may be taken directly to the meat treatment section 50 (Figure 2) by booster pump 49 through piping 52.

The ionization section 16 and charging tank 42 are constructed and operated substantially in the manner disclosed and operated substantially in the manner disclosed and described in the aforementioned patents, 4,264,631 ff. The charging tank generally consists of a large vat capable of holding 20 gallons and having support means therein for supporting an anode plate 54 and a cathode plate 56 at opposite ends of the tank. The plates are connected to a suitable DC power supply 58. After the salt has been thoroughly mixed and dissolved into the incoming water in the mixing section 14, the salt solution is carried through the spigot under gravity and fills the charging tank, all under the control of valves 18 and 48 and timer 32. Additionally, timer 32 send a signal to the power supply 58 to begin the ionization cycle after the fill cycle is complete. The ionization cycle consists of applying a DC voltage of 10.5 volts at a rate of about 4-12amps for the duration of the ionization period, approximately 2-3 minutes. After the charging cycle is complete, the spigot valve 48 is opened so that the charged salted and ionized water solution flows under gravity through the charcoal bed 47 and thence to the meat treatment station.

The following particulars are given with respect to the design and fabrication of the water treatment station of the invention as is particularized for a 20 gallon batch operation. The deionization tanks include two 3.61 cationic exchange tanks and two 3.61 anionic exchange tanks. Pressure gauges are .0-100 STD, the filter 26 is a 20 inch CUNO GSOB-2 filter contained within a filter housing 1PAZ. All of the piping valves and hoses are of PVC construction suitable for use in a food processing plant.

The UV sterilization unit 30 may be an Aquafine SL-1. A circulating pump is a Gundfos 3/4 H.P. Cp 2 30ku pump having a 6-8 gpm capacity for developing a 100 pound water pressure head. Water meter 18 is a Neptune T-10 having 3/4 U.S. gpm capacity.

The rack 40 may be a Rubbermaid Utility Rack #3314, particularly useful for supporting the charging tank 42 which may be Rubbermaid CARB-X Storage Boy #3301, a food grade plastic tank.

The charging plates are 15 inches by 21 inches rectangular in form. The anode plate is pure nickel. The cathode plate is stainless steel. Suitable vented lids may be employed for partially covering the tops of the various elements such as charging tank 42 and filter 46, if desired.

The mixing bowl is shaped in such form as to provide a hemispherical mixing chamber having a diameter of about 8 inches at the top. The outlet spigot 44 from the mixing bowl is approximately 1 to 1-1/4 inches in diameter. The input supply rate may be at approximately 6 gallons per minute and the agitation cycle time is approximately or slightly more than 3 minutes. Generally, when water flow is started, salt is immediately added and, if simultaneous and continuous uniform supply of water and salt is made to the bowl, it is found that the salt will not cake but will dissolve readily. In that connection, it is known that salt is rather hygroscopic and, if water is adhered on the surface of salt crystals, it becomes more difficult to dissolve. For this reason the salt is kept at a desiccated state before use and is immediately used after being exposed to the moisture of the air to prevent surface moisture from adhering. It is found in practice that while salt can be rather difficult to dissolve, that in the present quantities and under the conditions stated, salt is well dissolved in the mixing bowl approach of the present invention.

Referring to Figure 3 the operating cycle of the water treatment station of the present invention is set forth in a timing diagram. Thus, in Figure 3a, the flow of inlet water is started at 62 and simultaneously the UV lamps of the filter 30 are turned on. The flow of water extends for a predetermined period, somewhat greater than 3 minutes, at which time the flow is turned off at 64 and also the UV lamps are turned off at the same time.

Just prior to the initiation of water flow, the salt may be added to the mixing bowl to fill the same. The water flow is started. In this way the incoming water causes a swirling action which works from beneath the partially filled bowl and the salt solids therein and from beneath to agitate, swirl and create good mixing of the water in a continuous way with all of the salt solids which, because they lack support from beneath after they have been dissolved and during the outflow of water from the mixing bowl, the remaining salt body above the dissolved part gradually settles down and flows in an agitating way into the mixing action taking place at the bottom of the bowl. Additional swirling and mixing action can be created by the use of back pressure in the feed line.

During the period of salt dissolution in the mixing bowl and that portion of the water fill cycle, the power supply current (Figure 3c) has remained off. After filling the power supply is turned on the charging current is then applied. Generally, the charging current is found to be satisfactory as applied for approximately 2-3 minutes at a charge level of about 4-8 amps. The voltage of the power supply will be quite low during a portion of the charging cycle and the power supply must be of very high quality to deliver such amperage at very low resistance levels.

After the charge time is completed as at 66, the charging cycle is stopped by turning the power supply off and the dump valve 48 is opened for charged water through the charcoal bed of filter 46 from which is taken to the meat treatment station of Figure 2. There, the ionized solution is passed to a holding tank 60 from which it may be pumped through pump 62 to the meat 64, via injection apparatus 68, for example, as is known and shown in the referenced patents.

## Alternative Embodiment for Continuous Charged Solution Supply

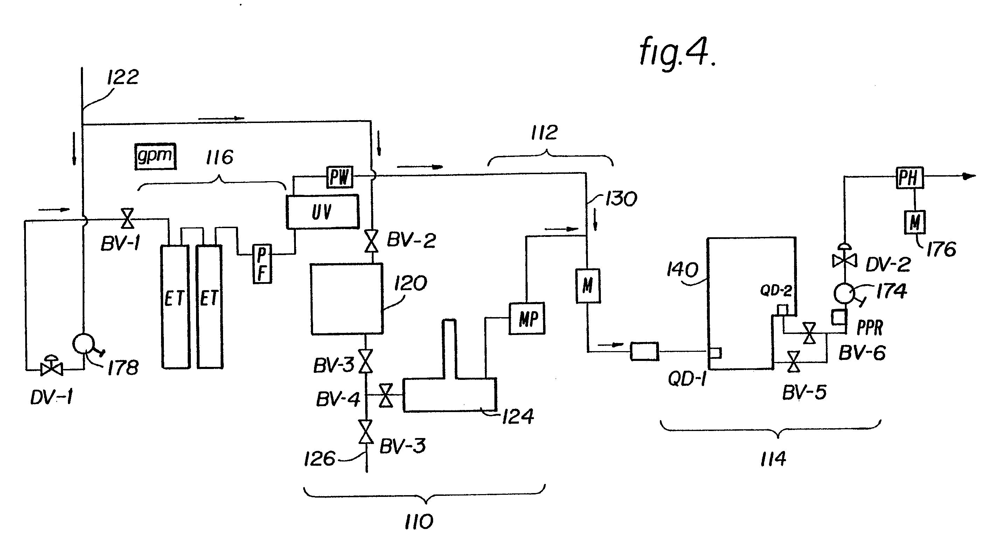

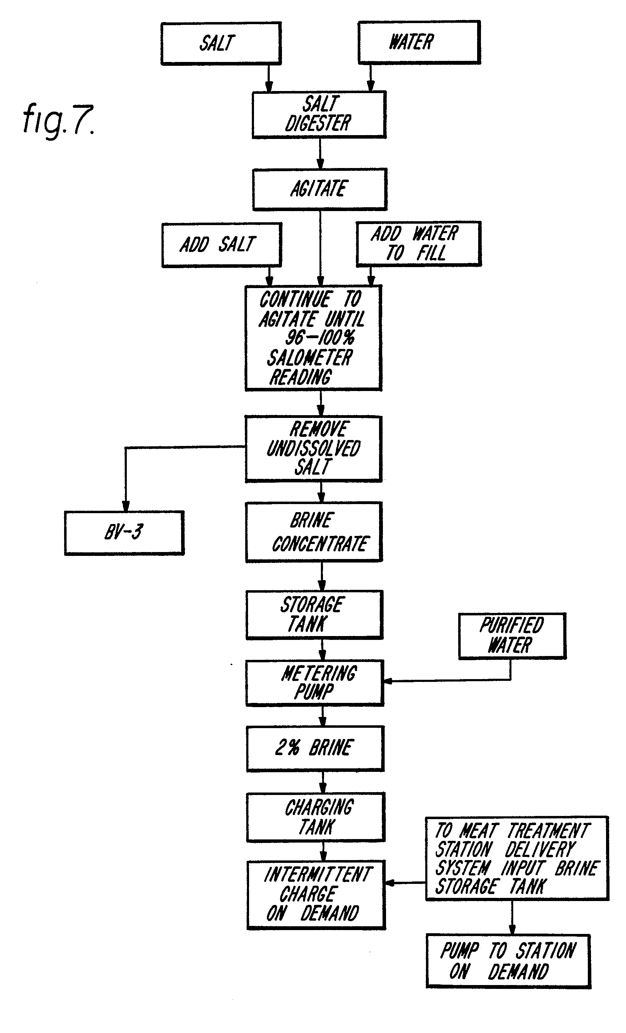

In plants where meat processing volume is high there is a need for a charged brine supply that can respond to demands ranging from intermittent to continuous. For this purpose the method and apparatus of Figures 4-7 has been developed and has been found satisfactory.

Referring first to Figure 4, there is shown a system diagram of a continuous delivery system built in accordance with the present invention.

The system includes generally a salt digester and storage tank station 110 for a concentrated brine, a metering station 112 for adding concentrated brine to treated inlet water to obtain a solution of desired salt concentration for meat treatment, and a charging station 114 for applying an electrical charge treatment to the solution and for intermittent or continuous delivery to the meat treatment station of Figure 2. A water pretreatment station 116 is provided in a manner and for purposes as previously explained in connection with the method and apparatus of Figure 1.

The salt digester and storage tank station 110 includes a digester 120 having an input connected to the incoming tap water supply 122 and an outlet at its bottom connected through ball valve BV-4 to the input of a brine storage tank 124. A by-pass line 126 with series connected ball valve BV-3 allows pumping of excess undissolved salt at the beginning of each operating cycle. The digester of the type provided with an agitator for assisting in the dissolving of salt. The tank 124 holds concentrated brine for use as needed and drawn on by the metering pump MP. To make concentrated brine solution 130 pounds of salt are used. First 40 gal. of water are admitted into the digester through ball valve BV-2. Then an 80 lbs. bag of salt is dumped into the digester and agitated. When dissolved, another 50 lbs. of salt is added and ball valve BV-2 opened to fill the digester with water, agitation continued until a salimeter reading of 96%-100% is obtained. Valve BV-3 is then opened to dump the undissolved salt as waste. This helps prevent salt build-up in the brine storage tank and possible clogging of the metering pump. As brine level in the storage tank is drawn down, a new batch of brine can be made up in the digester so that the storage tank can be refilled before running out.

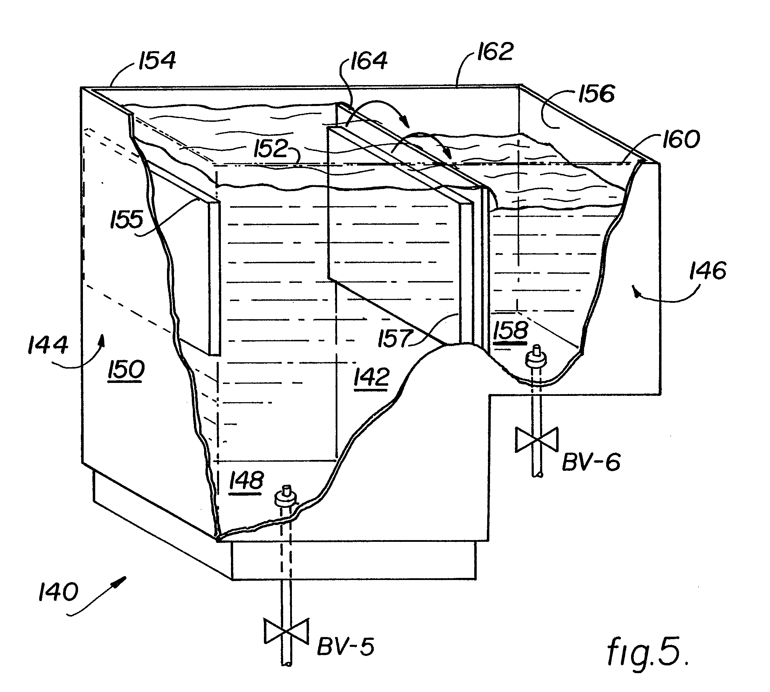

The metering station 112 includes a metering pump MP which receives concentrated brine and delivers a measured ratio thereof to water flowing in the purified water inlet line 120 at the inlet to an in-line mixer M made of PVC plastic. The metering pump is provided with a calibrated dial adjustment for selecting the desired salt concentration for the rest of the system. The storage tank 124 is provided with a stand pipe 124a to accommodate pressure surges. The output of the metering station process through a series connected conductivity cell CC and quick disconnect QD-1 to the lower, input connection of a charging tank 140, more fully shown in Figure 5.

The tank is divided by wall 142 into two compartments 144, 146, the first defined by bottom 148, side walls 142, 150 and front and back wall 142 terminates slightly below adjacent walls 152, 154. Compartment 146 is defined by side walls 142, 156, bottom 158 and front and back walls 160, 162. Wall 142 terminates slightly below adjacent walls 152, 154 and 160, 162 so as to form an overflow weir between them at 164. Brine is admitted through quick disconnect fitting QD-1 at pH8 to flow upwardly, filling chamber 144 to overflowing. A pair of parallel, opposed charging plates 155, 157 are affixed near the upper portions of walls 142, 150 and consist of a nickel anode 170 and a stainless steel cathode 172, connected across a suitable d.c. power supply, as previously described in connection with the first embodiment.

Chamber 146 serves as storage for charged brine which is drawn from and delivered to a meat processing station (Fig. 2) by brine transfer pump 174 and priming reservoir PPR through valve BV-6 and Wye strainer YS. The brine starts at about pH8 and is charged to pH10, which is monitored by in-line probe pHp and pH meter 176.

The entire system up to chamber 146 is driven by a feed pump 178 operating in series with pressure regulator PR, pressure gauge PG, solenoid valve SV (to prevent flow when pump 178 is off) and ball valve BV-7 (to shut off system during repair).

Pretreatment station 116 includes ion exchange tanks ET connected in series with a filter PF to ultraviolet lamp bacteriostat units UV and a flow sensor PW for measuring flow through and for sending a signal to digital flow meter readout used to adjust flow of the main feed pump 178.

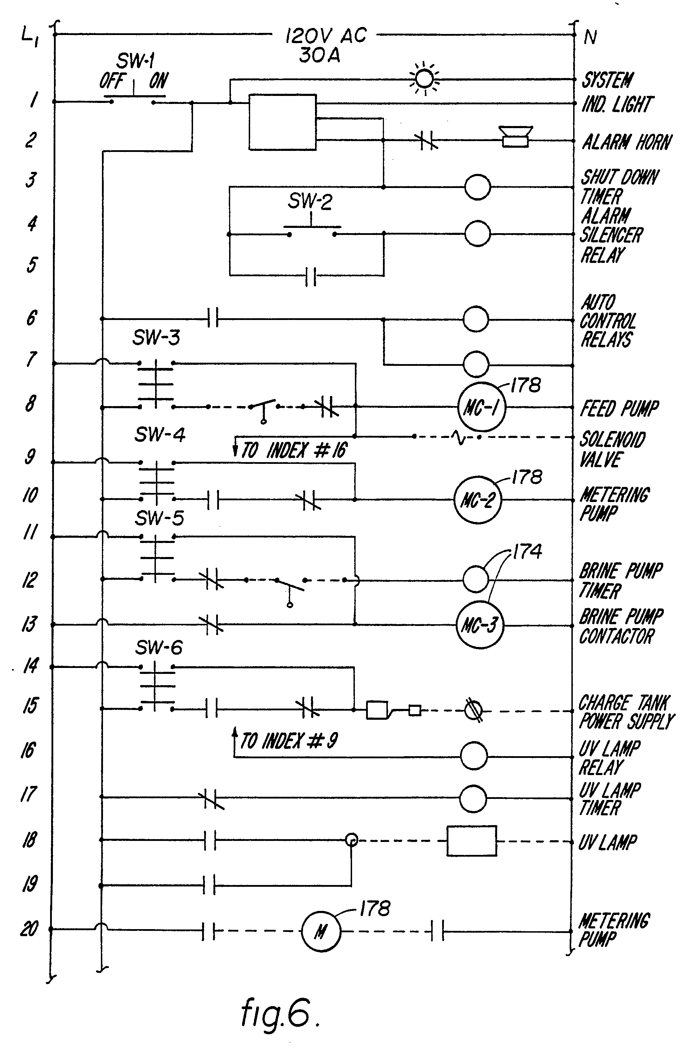

Figure 6 is a wiring diagram for the apparatus of Figure 4, where like parts have been given like designations.

In operation, the initial conditions require firm connection of the anode and cathode wires to their respective plates 155, 157, QD-2 connected, BV-5 open, and BV-6 closed. Then, QD-1 is disconnected from the charging tank to allow adjustment of flow rate and metering pump for the proper mixture before filling the charging tank. Switches SW-2 and SW-3 (feed pump) are turned to auto. This will activate the flow of water through the system and into the charging tank. Digital flow meter is then adjusted to obtain approximately 16.5 gpm (flow can be regulated by turning valve of valve handle DV-1).

After adjusting the flow rate to approximately 16.5 gpm, switch #4 (Metering Pump) located on the control panel is turned to auto. This will activate the flow of brine solution from the BST to the charging tank. The conductivity meter, which is pre-set for approximately 2% salt, should read approximately 30 to 32. The percentage of brine being pumped through the brine pump can be adjusted by turning the output adjustment knob on the metering pump. There are lights on the conductivity meter located on the control panel which indicate if the brine solution is above (red) or below (green) desired percentage of salt. Should red light go on, the metering pump is adjusted by reducing the stroke. If green light is on, the stroke of the metering pump MP should be increased with the adjustment knob (up to decrease stroke, down to increase stroke).

After the proper flow rate (approximately 16.5 gpm) and the correct percentage of brine solution (30 - 32 on the conductivity meter) is obtained, QD-1 is connected to the charging tank and switch SW-6 is turned on.

Switch SW-5 (Brine Transfer Pump) located on control panel is then turned to the auto position. The brine pump is controlled by the low level switch located near the bottom of the side tank that collects the charged solution. When the side tank is approximately 3/4 full, brine transfer pump should automatically start up. If the brine transfer pump starts before or after the tank is 3/4 full, the pump is regulated by adjusting the metering pump timer 2TR.

If the brine transfer pump is drawing the charged solution out of the side tank too fast or too slow, diaphragm valve (DV-2) is adjusted to obtain the correct flow. The reading on the pH meter is checked periodically to maintain an ample charge through the charging tank. The pH should be approximately 1 to 2 points higher (at pH10) than the uncharged solution (at pH8).

The continuous procedure for making brine just described provides reliable operation virtually eliminating shutdown from mechanical failure. In the particular size described instantaneous capacities of 17 gallons per minute and 200 gallons per hour are achieved with a peak available capacity of as much as 8,000 to 10,000 gallons per day. The particular design of the charging tank provides 17 gallons per minute of highly effective, charged brine which, due to upward flow during charging, has allowed bubble off of excess gases and O2 and CO2 which escape at the top of the charging section as the brine rises through the upper part of the tank. The escape of these gases is important since they would have a deleterious effect on the treated meat product.

## Claims

1. Apparatus for preparing an ionized salt solution for treating meat comprising,

a water pretreatment station for cleaning and purifying water,

means for passing incoming water through said pretreatment stations, and for delivering the same to a discharge pipe terminating in an orifice outlet to discharging downwardly into standard atmospheric temperature and pressure,

a salt dissolution mixing bowl having an upwardly facing opening for receiving salt and water freely flowing from said discharge orifice,

a source of dry, pure sodium chloride salt,

salt measuring means for delivering a predetermined quantity of salt to the bowl,

an aqueous salt solution discharge at the bottom of the bowl,

a charging tank including a pair of spaced electrodes,

a power supply connected to said electrodes for delivering a direct current thereto for a time sufficient to treat said salt solution to cause the same to become ionized.

2. The apparatus as in claim 1 further including a utility rack for supporting said mixing bowl at the top, the charging tank below the mixing bowl, and the charcoal filter below the charging tank so that the mixing, charging and final filtering operations can proceed under gravity flow between them.

3. The apparatus as in claim 1 in which said mixing bowl is generally hemispherical with a large opening facing upwardly and below said water discharge orifice for receiving treated water therefrom,

said bowl having lower portions converging towards an outlet in a region forming a slope so that addition of salt through the top with incoming water results in agitation and intimate contacting and mixing of water and salt so as to facilitate dissolution of the salt into the water.

4. Apparatus as in claim 1 in which said pretreatment station includes water filter means for removing particulate solids from incoming water connected to a source thereof,

deionizing means including cationic and anionic elements for removing ions from said water and

a bacteriostat for killing bacteria and other organisms in said water.

5. The apparatus as in claim 1 further including a drain from said ionizing tank, a charcoal filter for receiving charged solution therefrom and connected into said drain before passing the solution to the meat treatment station.

6. A method for preparing an ionized salt solution for treating meat comprising,

providing a water pretreatment station for cleaning and purifying water,

providing means for passing incoming water through said pretreatment stations and for delivering the same to a discharge pipe terminating in an orifice outlet to discharging downwardly at standard atmospheric temperature and pressure,

providing a salt solution mixing bowl having an upwardly facing opening for receiving a charge of salt and water freely flowing from said discharge orifice, and further providing an aqueous salt solution discharge at the bottom of the bowl,

pouring a charge of dry, pure sodium chloride salt into said bowl measured to a predetermined batch quantity,

causing a measured quantity of water to be discharged over said salt and into said bowl to cause the salt to be dissolved,

providing a charging tank including a pair of spaced electrodes positioned to receive salt solution from said discharge, and

supplying a power to said electrodes for delivering a direct current thereto for a time sufficient to treat said salt solution to cause the same to become ionized for treatment of meat.

7. Method for preparing a charged salt solution for treating meat comprising intermittently preparing a concentrated brine solution from salt and water,

stirring the solution in the storage tank,

intermittently or continuously metering concentrated brine from the storage tank with purified water to form a dilute concentration solution of about 2% salt for meat treatment, passing the dilute concentration solution upwardly through a charging tank and in the space between opposed electrodes from which the solution overflows as a charged solution of increased pH to a reservoir,

applying a charging current to said solution as it passes between the electrodes,

drawing charged solution from the reservoir to a meat treatment station on demand.

8. The method as in claim 7 in which said brine solution is prepared as a saturated solution.

9. Apparatus for preparing a charged salt solution for treating meat comprising means for intermittently preparing a concentrated brine solution from salt or water,

means for storing the solution,

means for intermittently or continuously metering concentrated brine from this storage means with purified water to form a dilute concentration solution of about 2% salt,

means for forming a charging tank and including space and opposed parallel plate electrodes defining a volume through which the dilute concentration solution may be passed,

means for flowing the concentration through said space,

means for applying a charging voltage to said electrodes,

means for forming a reservoir for receiving charged dilute concentration solution from said charging space,

and means for drawing charged solution from the reservoir to a meat treatment station on demand.

fig.1.

fig.2.

fig.3.

fig.4.

EP 0 304 148 A2

fig.5.

EP 0 304 148 A2

fig.6.

fig.7.

```
  ┌──────────┐        ┌──────────┐
  │   SALT   │        │  WATER   │
  └────┬─────┘        └────┬─────┘
       │                   │
       ▼                   ▼
     ┌─────────────────────┐
     │        SALT         │
     │      DIGESTER       │
     └──────────┬──────────┘
                │
                ▼
        ┌───────────────┐
        │    AGITATE    │
        └───────┬───────┘
                │
┌──────────┐    │    ┌──────────────┐
│ ADD SALT │    │    │  ADD WATER   │
│          │    │    │   TO FILL    │
└────┬─────┘    │    └──────┬───────┘
     │          │           │
     ▼          ▼           ▼
     ┌─────────────────────┐
     │    CONTINUE TO      │
     │   AGITATE UNTIL     │
     │      96-100%        │
     │     SALOMETER       │
     │      READING        │
     └──────────┬──────────┘
                │
                ▼
     ┌─────────────────────┐
     │       REMOVE        │
     │    UNDISSOLVED      │
     │        SALT         │
     └──────────┬──────────┘
                │
┌──────────┐    │
│   BV-3   │    │
└──────────┘    ▼
     ┌─────────────────────┐
     │        BRINE        │
     │     CONCENTRATE     │
     └──────────┬──────────┘
                │
                ▼
        ┌───────────────┐
        │    STORAGE    │
        │     TANK      │        ┌──────────┐
        └───────┬───────┘        │ PURIFIED │
                │                │  WATER   │
                ▼                └────┬─────┘
        ┌───────────────┐            │
        │   METERING    │◄───────────┘
        │     PUMP      │
        └───────┬───────┘
                │
                ▼
        ┌───────────────┐
        │   2% BRINE    │
        └───────┬───────┘
                │
                ▼
        ┌───────────────┐
        │   CHARGING    │
        │     TANK      │
        └───────┬───────┘
                │              ┌────────────────────┐
                ▼              │ TO MEAT TREATMENT   │
        ┌───────────────┐      │ STATION  DELIVERY   │
        │ INTERMITTENT  │◄─────│ SYSTEM INPUT BRINE  │
        │    CHARGE     │      │ STORAGE TANK        │
        │  ON  DEMAND   │      └──────────┬──────────┘
        └───────────────┘                 │
                                          ▼
                               ┌────────────────────┐
                               │  PUMP TO STATION   │
                               │    ON   DEMAND     │
                               └────────────────────┘
```